# EUROPEAN PATENT SPECIFICATION

(11) **EP 3 964 319 B1**
(45) Date of publication and mention of the grant of the patent: **23.10.2024**
(21) Application number: 20194354.5
(22) Date of filing: 03.09.2020
(51) Int. Cl.: B23K 26/06, G02B 7/02

(54) **A LENS HOLDER FOR A LASER PROCESSING HEAD AND A LASER PROCESSING HEAD HAVING THE SAME**
LINSENHALTER FÜR EINEN LASERBEARBEITUNGSKOPF UND LASERBEARBEITUNGSKOPF DAMIT
SUPPORT DE LENTILLE POUR UNE TÊTE DE TRAITEMENT LASER ET TÊTE DE TRAITEMENT LASER L'UTILISANT

(43) Date of publication of application: 09.03.2022
(73) Proprietor: Precitec GmbH & Co. KG, 76571 Gaggenau (DE)
(72) Inventor: Herzog, Marius, 77887 Sasbachwalden (DE)
(74) Representative: Ter Meer Steinmeister & Partner

(56) References cited:
- DE-U1- 202016 005 318
- JP-A- S5 887 504
- US-A1- 2005 270 668
- US-A1- 2019 391 502
- US-A1- 2020 264 402

## Description

The present invention relates to a holder or mount for mounting an optical element to a laser processing head, in particular to a lens holder or a lens mount for mounting an optical lens to a laser processing head, and to a laser processing head having the same.

In recent years, laser processing devices i.e. devices that use laser beams have been increasing deployed in different industries e.g. various fabrication devices using laser beams are pervasively used in the manufacturing industry. Such laser processing devices use a laser beam which is generated by a laser source and directed towards a target or workpiece for carrying out various techniques such as cutting, machining, engraving, etc. While being transmitted from the laser source to the workpiece or target, the laser beam is generally required to be optically altered e.g. being focused onto the workpiece. Such optical alteration of the laser beam is performed by using one or more optical lenses which are required to be installed and maintained in a desired spatial relationship, e.g. intervening distance, angle of incidence, etc., with respect to the workpiece and/or with respect to the incoming laser beam.

Such laser processing devices generally have a component referred to as a head, also referred hereinafter to as laser processing head, e.g. a laser cutting head or a laser welding head, and that faces the workpiece during application of the laser beam and at/within which the lens is installed using a lens holder, also referred to as a lens mount. The lens holder/mount is a mechanical interface that holds the lens in a desired orientation e.g. in a desired spatial relationship between the incident laser beam and the workpiece within the laser processing head. Such lens mounts generally employ a socket having an aperture at which the optical lens is disposed and is held in position by using a fixing means that physically hold the optical lens in place.

In order to compensate for manufacturing tolerances, the fixing means normally includes an elastic element with axial application of force, e.g. such as a threaded annular spring. However, because the fixing means contacts the optical lens, it often causes abrasion of its optical surface which leads to deterioration of the optical lens or any coatings/films that may be disposed on the lens surface, which may then cause optical aberration, and finally failure of the function of the lens. Also, in case of a threaded fixing means, additional abrasion occurs between the threads when screwing the fixing means in the socket.

The abraded particles dirty the optical surface(s) of the lens, thus affecting adversely the efficiency and the quality of the laser processing. In particular, the abraded particles may even burn up, e.g. in high power laser applications that use equal to or greater than 8 kW (kilowatt) laser power, which may further deteriorate the optical properties or functioning of the lens or even lead to a defect of the laser processing head itself. In addition, metal-cutting manufacturing of the fixing means often leads to increased formation of metal burrs and splinters.

Moreover, the laser processing heads are often required to be moved from one spatial orientation or position to another spatial orientation or position. For example, the laser processing head of a laser processing device may be required to be moved into a desired position/orientation before initiating laser processing and/or after completing laser processing. More importantly, in various laser processing devices, the laser processing head is required to be moved during laser processing, i.e. while the laser beam is being irradiated by the laser processing device onto the target/workpiece. Therefore, a stable and robust mounting of lenses within the laser processing head is required.

US 2005/270668 A1 presents a fixation method for fixing an optical member to a holding member using irradiation of a laser beam. The method includes the steps of inserting the optical member into the holding member, providing a fixing member, mounting the fixing member to the holding member having the optical member positioned therebetween, and irradiating laser beams on the holding member through the fixing member.

JP S58 87504 A presents a lens holding device. A lens to be held has an inclined tapered surface on its outside circumference. An elastic piece projected in the inside direction from a wall surface of the inside circumferential side of a lens frame projects a stopper for controlling the lens in the optical axis direction, and they are formed as one body. The projecting direction of each elastic piece is constituted in accordance with a gradient of the tapered surface of the lens. The outside diameter of the lens and the inside diameter between each elastic piece are set so that the lens can be held by each elastic piece.

US 2019/391502 A1 presents an optical component holding apparatus which is capable of easily correcting tilts of optical components by reducing distortion of the optical components themselves even if the optical components are not substantially circular. A first lens and a second lens which are the optical components are housed in a lens holder. An elastic member urges the first lens against a lens holder to determine a position of the first lens in a direction of an optical axis. The lens holder, the first lens, and the elastic member abut against one another at three positions that are substantially the same when the lens holder, the first lens, and the elastic member are viewed in the direction of the optical axis.

DE 20 2016 005318 U1 presents a holding arrangement with a disk-shaped optical element for a laser processing device, a substantially ring-shaped mount for the optical element and with a clamping ring for clamping the optical element in the mount, wherein the mount is provided on its inner circumference with an axial element abutment with which the optical element can be brought into abutment in an axial assembly direction, the clamping ring having at least one end face in mounting direction can be inserted into the mount so that the clamping ring directly or indirectly exerts a clamping force with at least one component in the mounting direction on the optical element arranged on the element system, with the clamping ring is held in the position acting on the optical element on the mount by means of an undercut which, during assembly, between the clamping ring and mount at least partial resilient deformation of the clamping ring can be formed.

### Summary

Thus, a technique for fixing an optical element in a holder is desired which at least partially obviates one or more of the above disadvantages. In particular, it is an object of the present disclosure to provide a holder for mounting an optical element and a laser processing head having the holder with increased technical cleanliness is required. Further, it is an object of the present disclosure to provide a holder for mounting an optical element and a laser processing head having the holder capable of a stable and robust mounting of the optical element in axial and/or radial direction.

One or more of the above objects are achieved by the subject matter of the independent claims, in particular by a holder for mounting an optical element to a laser processing head, and by a laser processing head having the holder. Advantageous embodiments are provided in dependent claims.

In a first aspect of the present technique, a holder for mounting at least one optical element, in particular a lens, to, i.e. into or at, a laser machining head in accordance with claim 1 is provided. The holder has a socket, an annular disk-shaped spring part and a fixing means for fixing the spring part to the socket when or while the at least one optical element is disposed between the socket and the spring part.

The optical element may be replaceably mounted in the holder.

The optical element may be a transmissive optical element, such as a lens, a protective glass or a beam-shaping optic. The optical element may include at least one optical coating at one or both optical surfaces. The optical coating may be used to alter one or more optical properties of the optical element, for example for increasing or decreasing reflectance, transmittance, polarization, and so on and so forth. The optical element may be adapted to optically alter a laser beam having a laser power equal to or greater than 6kW (kilowatt), preferably equal to or greater than 8 kW (kilowatt). Such optical elements are generally bigger and heavier than optical elements used for laser beams having comparatively lesser laser power. The optical element may be a convex lens, a concave lens, a plano-convex lens or a plano-concave lens. The optical element may include at least one of a focusing lens and a collimating lens.

The at least one optical element may comprise a plurality of optical elements. The optical elements may be stacked. The optical elements may be coaxially aligned i.e. an optical axis of an optical element of the plurality may be aligned with or may be coincident with an optical axis of another optical element of the plurality.

At least two optical elements in the plurality of optical elements may be spaced apart by a spacer.

At least two optical elements in the plurality of optical elements may be contiguous i.e. may be in surface contact with each other wherein an optical surface of one of the optical elements is in surface contact with an optical surface of another of the optical elements.

The socket has an aperture and a seat. The seat encircles the aperture. The seat is configured to receive the optical element such that the optical element is positioned at the aperture. A distance between the seat and the mounting surface along a central axis of the socket or along an optical axis of the optical element is less than a thickness of the optical element at a circumference thereof. Thus, when the optical element is mounted in the holder, the spring elements are deformed to press the optical element onto the seat of the socket. Here, a contact of the spring part with the optical element may only occur at a (circumferential) edge of the optical element.

The socket may have a tubular or hollow shape. The socket may comprise an outer peripheral surface, and an inner peripheral surface defining at least a part of a bore or a through-hole of the socket.

The outer and inner peripheral surfaces may be disposed generally substantially parallel to each other. The outer and inner peripheral surfaces may be disposed generally substantially parallel to an optical axis of the optical element e.g. an optical axis of the lens.

The socket may also have a first surface and a second surface at which openings of the bore/hollow are disposed e.g. an upper or a top surface and a lower or a bottom surface of the socket. The first and the second surfaces may be disposed generally substantially parallel to each other. The first and the second surfaces may be disposed generally substantially perpendicular to the optical axis of the optical element.

The aperture may be understood as an opening or a gap, such as a through-hole, formed in the socket and defining a space through which light passes. The socket may have an annular shaped cross-section when sectioned at a plane perpendicular to the optical axis of the optical element. The bore or though-hole, generally central, of the annular shaped cross-section may define the aperture of the socket. That is, the aperture may be defined by a portion of the bore or through-hole of the socket having the smallest area in a plane perpendicular to an optical axis of the optical element.

The seat may be understood as a seat or site or location at which parts of the optical element e.g. the lens are positioned or supported.

The seat may be formed as a step, or a seating lip or a protrusion such as a rib or collar that extends radially inwards from an inner peripheral surface of the socket which may also be referred to as an inner circumferential surface of the socket i.e. a surface defining the bore or though-hole of the annular shaped cross-section of the socket.

The seat may be formed in one-part, or in other words may have a continuous structure that circumscribes or surrounds the aperture.

Alternatively, the seat may be formed of a plurality of seat segments that together circumscribe the aperture.

The seat segments may be spaced apart from each other and may be circumferentially arranged at the aperture. Optionally, the seat segments may be equidistantly arranged with respect to each other.

The seat segments may be planarly arranged with respect to each other. Optionally, the plane at which the seat segments are arranged may be perpendicular to the central axis of the socket and/or to the optical element axis.

The seat may be configured to support, e.g. to directly/physically contact, the optical element at at least three contact points. Preferably, the seat may be configured to support or directly/physically contact the optical element at at least one contact point in each quadrant of the optical element, e.g. of the lens, or the aperture.

The contact points may be equidistantly arranged with respect to each other. Optionally, the contact points may be spaced apart from each other and may be circumferentially arranged at the aperture.

The contact points may be planarly arranged with respect to each other. Optionally, the plane at which the contact points are arranged may be perpendicular to the central axis of the socket and/or to the optical element axis.

The aperture may have a circular or non-circular cross-sectional shape. The seat may correspond to the cross-sectional shape of the aperture of the socket.

The annular spring part, hereinafter also referred to as the spring part, is configured to be positioned at a mounting surface of the socket, for example at the first surface or the upper/top surface of the socket. The annular spring part may be disk-shaped, i.e. planar, at least in an unmounted state of the optical element. The spring part has a rim portion and a plurality of cantilever spring elements. The spring part contacts the optical element only at an outer circumferential edge of the optical element with the cantilever spring elements. In other words, the spring element does not contact an optical surface of the optical element or a coating on an optical surface of the optical element. The cantilever spring elements may be reversibly deformable, i.e. elastically deformable. The cantilever spring elements may be emanating from the rim portion and extending radially inwards from the rim portion. Each cantilever spring element has a radially-inner edge or side, preferably radially-innermost edge or side. The radially-inner edges of the cantilever spring elements together define an opening that overlaps the aperture, at least partially and preferably completely. Here, the diameter of the opening defined by the cantilever spring elements may be smaller than or equal to or larger than the diameter of the aperture. In other words, with respect to the optical element axis, the aperture and the opening may be axially spaced apart and overlap when viewed axially. The radially-inner edges of the cantilever spring elements may be concave or curved towards the rim portion. In other words, the radially-inner edges of the cantilever spring elements may be formed as circular arcs of one circle.

The spring element is termed as 'cantilever' because the spring element is supported only at one end, i.e. a radially outer end of the spring element is supported by the rim portion, while another end i.e. a radially inner end, of the spring element is unsupported or is a free end. Hereinafter, the cantilever spring element/elements is/are also referred to as the spring element/elements.

The spring element may have constant width. That is, when viewed axially, with respect to a central axis of the spring part, the width of the spring element may be constant from the radially-outer part of the spring element disposed adjoining the rim portion, towards and preferably up to the radially-inner edge of the spring element. The central axis of the spring part may be perpendicular to a plane of the rim portion, i.e. the central axis of the spring part may be coaxial to the optical axis of the optical element when mounted in the holder.

Alternatively, the spring element may have a tapering width. That is, when viewed axially, with respect to the central axis of the spring part, the width of the spring element may decrease from the radially-outer part of the spring element disposed adjoining the rim portion, towards and preferably up to the radially-inner edge of the spring element.

The radially-inner edges of the spring elements, i.e. the free ends of the cantilever spring elements, may be separated and spaced apart from each other and may be circumferentially arranged. Optionally, the radially-inner edges of the spring elements may be equidistantly arranged with respect to each other.

The spring elements may be planarly arranged with respect to each other, for example when in a default or unloaded state, i.e. in an unmounted state of the optical element, i.e. without abutting against the optical element. Optionally, the plane at which the spring elements are arranged may be perpendicular to the central axis of the spring part and/or to the central axis of the socket and/or to the optical axis of the optical element.

The spring part may include at least three cantilever spring elements. The spring elements may be configured to contact the optical element at at least three contact points. In other words, the plurality of spring elements may comprise at least three spring elements and each spring element is configured to contact the optical element at a corresponding contact point. Preferably, the spring elements may be configured to contact the optical element at at least one contact point in each quadrant of the optical element or the aperture. In other words, the plurality of spring elements may comprise at least one spring element corresponding to each quadrant of the rim portion.

At least some of the spring elements may be arranged at the rim portion equidistantly with respect to each other.

The fixing means is configured to fix the rim portion of the spring part to the mounting surface of the socket. Thus, the deformation/restoration movement of the spring elements is unhindered by the fixing means. The fixing means may be configured to fix the rim portion of the spring part to the mounting surface of the socket such that the cantilever spring elements are disposed on the optical element for pressing the optical element towards the seat, when the optical element is received at the seat.

The rim portion and the cantilever spring elements may be integrally formed, i.e. may be formed as one part.

The rim portion may have a rigid structure i.e. may not be generally elastically deformable. In other words, even when the spring elements are elastically deformed, the rim portion may be configured, for example due to shape or relative arrangement or interaction of the rim portion with other components such as with the mounting surface of the socket and/or with the fixing means, to maintain a default or undeformed state/configuration.

The rim portion and the cantilever spring elements may have a planar structure perpendicular to a central axis of the spring part, in an unloaded state, i.e. in an unmounted state of the optical element. While in the loaded state, i.e. in a mounted state of the optical element, the rim portion and the cantilever spring elements may assume a non-planar structure with respect to each other.

Alternatively, the rim portion and the cantilever spring elements may have a non-planar structure, for example in an unloaded state.

The rim portion and/or the plurality of the cantilever spring elements may have a radially symmetrical arrangement. This ensures uniform distribution of the pressing force applied by the spring elements to the optical element. The plurality of the cantilever spring elements may be configured to exert an axial force on the optical element, i.e. a force towards the seat. Thus, axial displacement of the optical element mounted in the holder can be prevented. The plurality of the cantilever spring elements may further be configured to exert a radial force on the optical element, in particular a force towards the optical element center or towards the optical axis of the optical element. Thus, also radial displacement of the optical element mounted in the holder can be prevented.

In the holder, the cantilever spring elements may be configured to only contact an edge of the optical element, i.e. to only contact a corner of the optical surface of the optical element at which the spring elements are disposed. Thus, the physical contact between the spring elements and the optical element is minimal and optical element abrasion is further reduced.

The optical element has a first optical surface and a second optical surface. The second optical surface may be configured as a surface of the optical element at which the laser beam is received into the optical element while the first optical surface may be configured as a surface of the optical element from which the laser beam is transmitted out of the optical element. Alternatively, the first optical surface may be configured as a surface of the optical element at which the laser beam is received into the optical element while the second optical surface may be configured as a surface of the optical element from which the laser beam is transmitted out of the optical element. The first and the second optical surfaces of the optical element may be opposite to each other. The first and the second optical surfaces of the optical element may be axially spaced apart, i.e. with respect to the optical axis of the optical element, also referred to as the optical element axis.

The second optical surface may be positioned on the seat and/or at the aperture of the socket. The first optical surface may be protruding outwardly above the mounting surface of the socket when the optical element is mounted in the holder.

The cantilever spring elements may be disposed at the first optical surface of the optical element for elastically pressing the optical element towards the seat.

Preferably, the cantilever spring elements may be disposed at the first optical surface of the optical element in such a way so as to contact only the circumferential edge/corner of the first optical surface of the optical element. In other words, each of the cantilever spring elements may be configured to abut only on the circumferential edge/corner of the first optical surface of the optical element.

A peripheral region of the second optical surface of the optical element may be received in the seat, preferably in such a way so as to contact only a small area along the circumferential edge/corner of the second optical surface of the optical element. In other words, only the circumferential edge/corner of the second optical surface of the optical element may abut in the seat.

An outer diameter of the spring part may be equal to an outer diameter of the mounting surface of the socket and/or may be greater than a diameter of the optical element. Thus, a compact dimension of the holder is achieved. Also, since the spring part does not protrude out of sides of the socket, chances of the spring part coming into undesired or accidental contact with another component of the laser processing device are reduced - thus fixing of the spring part implemented by the fixing means is maintained i.e. does not suffer undesired loosening. Furthermore, since the outer diameter of the spring part extends up to an outer diameter of the mounting surface of the socket, an optimally sized spring part may be used while maintaining compact dimension of the holder.

The fixing means may be configured to fix the rim portion of the spring part to an outer peripheral portion of the mounting surface of the socket. This arrangement allows to maximize the length or functional length, i.e. in the radial direction, of the spring elements. The term `functional length' may be understood as the length of the spring element that can undergo elastic deformation. The cantilever spring elements may all have the same length.

A diameter of the opening defined by the cantilever spring elements may be less than a diameter of the optical element - when the spring part is in loaded state, i.e. in a mounted state of the optical element, and/or is in default state, i.e. in an unmounted state of the optical element. Thus, the chance of the optical element slipping out of the spring part, particularly out of the radially-inner edges of the spring elements, is at least partially obviated. In particular, a diameter of the optical element may be greater than a diameter of the aperture and/or a diameter of the opening defined by the cantilever spring elements.

The fixing means may include a pressing ring and a fixing element. The pressing ring may be configured to be positioned on the rim portion of the spring part and configured to press the spring part, particularly the rim portion of the spring part, towards or onto the socket. The fixing element may be configured to fix the pressing ring to the socket in order to fix the rim portion of the spring part to the mounting surface of the socket. The above configuration of the fixing means using the pressing ring and the fixing element results in a uniform fixing of the spring part to the mounting surface of the socket. In other words, a fixing force of the fixing element may be evenly distributed by the pressing ring, thereby sturdily and uniformly fixing the rim portion onto the mounting surface of the socket. This sturdy and uniform fixing is advantageous, since the rim portion supports the cantilever spring elements which fix the optical element to the seat while being in a deformed or loaded state. The pressing ring may have a rigid structure i.e. may not be generally elastically deformable. The fixing element may include one or more torx screws, preferably torx screws having an internal drive.

The pressing ring may be formed in one-part or integrally. In other words, the pressing ring may have a continuous structure such as a complete ring. Thus, when seated on the rim portion, the pressing ring may continuously contact the rim portion in a circumferential manner. Alternatively, the pressing ring may be formed of a plurality of pressing ring segments that together are oriented/placed around the rim portion in a circumferential manner. The pressing ring segments may be arc-shaped. The pressing ring segments when positioned atop of the rim portion may form a continuous ring structure or may form an intermitted ring structure having gaps between adjacent pressing ring segments.

A shape of the pressing ring, or a shape formed by the pressing ring segments when arranged atop the rim portion, may correspond to a shape of the rim portion. Thus, a fixing force of the fixing element may be evenly distributed around the rim portion.

An annular width of the pressing ring or of the pressing ring segments may correspond to an annular width of the rim portion. Thus, a fixing force of the fixing element may be evenly distributed around the rim portion. An annular width of the pressing ring may be understood as a width, measured radially, of a surface of the pressing ring that is configured to contact, i.e. directly contact or be directly disposed on, the rim portion. The pressing ring may be formed such that the pressing ring only contacts an outer circumferential edge of the rim portion.

An inner diameter of the pressing ring may be greater than a diameter of the opening defined by the radially inner ends of the cantilever spring elements. Thus, the free or unsupported radially inner ends of the spring elements are not hindered by the pressing ring. The inner diameter of the pressing ring may be understood as a diameter of the central hole or bore of the pressing ring. An inner diameter of the pressing ring may be understood as an inner diameter of an annular shape (i.e. diameter of the hole/bore of in the annular shape) of a surface (subsequently in the description, also referred to as flat region) of the pressing ring that is configured to contact, i.e. that directly contact or that is directly disposed on, the rim portion.

An inner diameter of the pressing ring may be equal to or less than a diameter of a circumference defined by troughs formed between the cantilever spring elements. That is, an inner diameter of the pressing ring may be equal to or smaller than a sum of the diameter of the opening defined by the cantilever spring elements and twice of the length of one of the cantilever spring elements. Thus, the parts where the spring elements transfer the load to the rim portion are supported by the pressing ring. This ensures maintenance of sturdy fixing of the spring part.

An inner diameter of the pressing ring may be equal to or greater than a diameter of a circumference defined by troughs formed between the cantilever spring elements. That is, an inner diameter of the pressing ring may be equal to or greater than a sum of the diameter of the opening defined by the cantilever spring elements and twice of the length of one of the cantilever spring elements. Thus, a bending/unbending movement of the spring elements is not hindered by pressing ring. Also, the length of the spring elements that can be used for spring action of the spring elements, i.e. for bending and unbending, is maximized.

The pressing ring may have different cross-sectional shapes, such as a rectangular shape, a stepped shape, a substantially triangular shape, and so on and so forth.

The pressing ring may comprise a first surface facing away from the rim portion of the spring part and a second surface facing the rim portion of the spring part.

The second surface of the pressing ring may comprise a flat region perpendicular to a central axis of the pressing ring or to an optical axis of the optical element and a non-flat region disposed radially inwards of the flat region. The flat region may be configured to contact the rim portion of the spring part and the non-flat region is configured to be spaced apart from the spring part. Thus, even when the inner diameter of the pressing ring is smaller than a diameter of a circumference defined by troughs formed between the cantilever spring elements, the free or unsupported radially inner ends of the spring elements are not hindered by the pressing ring due to the spaced-apart non-flat region. Furthermore, a bending/unbending movement of the spring elements is not hindered by the pressing ring due to the spaced-apart non-flat region.

The non-flat region may be a stepped region, an inclined region, an inwardly indented region, and so on and so forth.

The flat region may be configured to contact troughs formed between the cantilever spring elements. Thus, the parts where the spring elements transfer the load to the rim portion are supported by the pressing ring by being pressed by the flat region. This ensures maintenance of sturdy fixing of the spring part.

The pressing ring may comprise a plurality of pressing ring holes, e.g. pressing ring screw holes. The pressing ring screw holes may include an internal thread for engaging with a thread of the fixing element. Preferably, the pressing ring holes may be equidistantly arranged. The fixing element may comprise a plurality of fasteners, e.g. screws, for being inserted into the pressing ring holes to fix the rim portion of the spring part to the mounting surface of the socket. The mounting surface of the socket may comprise a plurality of mounting surface holes corresponding to the plurality of pressing ring holes. The mounting surface holes may be blind holes. Alternatively, the mounting surface holes may be through holes penetrating through the socket. Preferably, the mounting surface holes are screw holes or include an internal thread for engaging with a thread of the fixing element.

The spring part may comprise a plurality of spring part holes, e.g. spring part screw holes, configured to receive the fasteners inserted into the pressing ring holes. In other words, the spring part may have a spring part hole corresponding to each of the pressing ring holes. Preferably, the spring part holes may be equidistantly arranged.

Alternatively, the fixing means may not have a pressing ring. In this case, the mounting surface of the socket may comprise a plurality of mounting surface holes. The mounting surface holes may be blind holes. Alternatively, the mounting surface holes may be through holes penetrating through the socket. Preferably, the mounting surface holes are screw holes or include an internal thread for engaging with a thread of the fixing element. The spring part may comprise a plurality of spring part holes, e.g. spring part screw holes, corresponding to the plurality of mounting surface holes. The fixing means may comprise a plurality of fasteners, e.g. screws, for being inserted into the mounting surface holes and/or spring part holes to fix the rim portion of the spring part to the mounting surface of the socket. Preferably, the spring part holes may be equidistantly arranged.

The spring part holes may be arranged or formed to be positioned radially outwards of the radially inner ends of the cantilever spring elements. The spring part holes may be arranged or formed to be positioned radially outwards of troughs formed between the cantilever spring elements. Thus, the length of the cantilever spring elements is not limited by the position of the holes of the spring part. Alternatively, the spring part holes may be arranged or formed to be positioned radially inwards of troughs formed between the cantilever spring elements. The cantilever spring elements adjacent to a spring part hole may be further spaced apart from each other and/or may have a shorter length than adjacent cantilever spring elements separated by a trough. Thus, the outer diameter of the spring part can be reduced, while maintaining the length of at least some of the cantilever spring elements.

The seat may be formed at an inner circumferential surface of the socket.

The seat may have an inner diameter equal to or greater than the diameter of the aperture. In one example, the seat may circumscribe the aperture or may define the aperture.

The inner diameter of the seat may be smaller than the diameter of the optical element. The diameter of the aperture may be smaller than the diameter of the optical element.

The inner diameter of the mounting surface may be greater than or equal to a diameter of the optical element.

The seat may have an outer diameter which may be equal to or less than the inner diameter of the mounting surface. The outer diameter of the seat may be equal to or greater than a diameter of the optical element.

The spring part and/or the socket may be made of metal. The spring part may be made of etched metal. The spring part may be made of or include spring steel, e.g. a steel alloy with material number 1.4028 or 1.4310. The spring part may have a uniform thickness, e.g. between 0.2 and 0.4 mm or about 0.3 mm. That is, the rim portion and the cantilever spring elements may have the same uniform thickness.

According to a second aspect of the present technique, a laser processing head for a laser processing system is presented. The laser processing head includes a holder, wherein the holder is according to any one of the embodiments of the first aspect of the present technique, described hereinabove.

The laser processing head may be configured for processing of a workpiece using a laser beam. Such fabrication technique also hereinafter referred to as laser fabrication techniques generally include any fabrication technique that employs a laser for manufacturing of a product or for making alterations in a workpiece - and may include techniques for e.g. laser processing, laser cutting, laser engraving, laser ablation, laser drilling, laser beam machining, laser beam welding, laser hybrid welding, laser soldering, additive manufacturing using laser such as laser printing, laser cladding, and so on and so forth.

In particular, the laser processing head may be a laser welding or laser cutting head.

The laser processing device may be configured for a laser beam equal to or greater than 6kW (kilowatt) laser power, preferably equal to or greater than 8 kW (kilowatt) laser power.

### Brief description of the drawings

Any references to 'radial', 'radially', 'circumferential', 'circumferentially' and like phrases is to be understood with reference to a central axis of the component being referred to, unless otherwise stated. For example if component 'A' comprises a subcomponent/part/region 'B' and a sub-component/part/region 'C', and it is stated that 'B' is radially inwards than 'C,' then it means 'B' closer to the central axis of the component 'A' than 'C', unless otherwise stated.

The above mentioned attributes and other features and advantages of the present technique and the manner of attaining them will become more apparent and the present technique itself will be better understood by reference to the following description of embodiments of the present technique taken in conjunction with the accompanying drawings, wherein:
FIG 1 schematically depicts a simplified exemplary embodiment of a laser processing system having a laser processing head of the present technique in which a holder of the present technique is incorporated;
FIG 2 is a perspective view illustrating an exemplary embodiment of a holder of the present technique;
FIG 3 is a cross-sectional view along the line A-A in FIG 2;
FIG 4 schematically represents an exemplary embodiment of the holder according to the present technique, without having the optical element e.g. the lens mounted therein;
FIG 5 schematically represents the holder of FIG. 4 having the lens mounted therein;
FIG 6 represents another exemplary embodiment of the holder according to the present technique, having the lens mounted therein;
FIG 7 represents a plan view of an exemplary embodiment of a spring part of the present technique, depicting relative diameters of different parts of the holder;
FIG 8 is a cross-sectional view along the line B-B in FIG 7;
FIG 9 represents a plan view of another exemplary embodiment of the holder of the present technique;
FIG 10 is a cross-sectional view illustrating an exemplary embodiment of a socket of the present technique;
FIG 11is a cross-sectional view illustrating another exemplary embodiment of the socket of the present technique;
FIG 12 is a cross-sectional view illustrating yet another exemplary embodiment of the socket of the present technique;
FIG 13 is a cross-sectional view illustrating an exemplary embodiment of a pressing ring of the present technique;
FIG 14 is a cross-sectional view illustrating another exemplary embodiment of the pressing ring of the present technique;
FIG 15 is a cross-sectional view illustrating yet another exemplary embodiment of the pressing ring of the present technique;
FIG 16 is a cross-sectional view illustrating a further exemplary embodiment of the pressing ring of the present technique;
FIG 17 is a cross-sectional view of an exemplary embodiment of the holder of the present technique depicting relative diameters of different parts of the holder;
FIG 18 represents a top view of an exemplary embodiment of relative positioning of the pressing ring and the spring part;
FIG 19 represents a top view of another exemplary embodiment of relative positioning of the pressing ring and the spring part;
FIG 20 represents a top view of yet another exemplary embodiment of relative positioning of the pressing ring and the spring part; and
FIG 21 represents another exemplary embodiment of the holder having a plurality of lenses mounted therein; in accordance with aspects of the present technique.

### Detailed description

Hereinafter, above-mentioned and other features of the present technique are described in detail. Various embodiments are described with reference to the drawing, wherein like reference numerals are used to refer to like elements throughout. In the following description, for purpose of explanation, numerous specific details are set forth in order to provide a thorough understanding of one or more embodiments. It may be noted that the illustrated embodiments are intended to explain, and not to limit the invention. It may be evident that such embodiments may be practiced without these specific details.

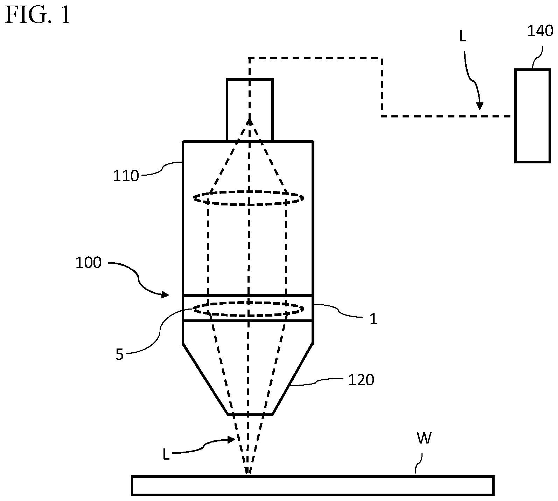

FIG 1 depicts a laser processing system having a laser processing head 100, such as a laser cutting head or a laser welding head, in which a holder or a mount 1 for mounting an optical element 5 according to the present technique is incorporated.

The laser processing system may be any system which is used to transmit or irradiate a laser beam onto a target surface or a workpiece. The laser processing system may be one of, but not limited to, a laser processing system, a laser cutting system, a laser engraving system, a laser ablation system, a laser drilling system, a laser beam machining system, a laser beam welding system, a laser hybrid welding system, a laser soldering system, an additive manufacturing system using laser such as a laser printing system, a laser cladding system, and so on and so forth. In the following disclosure, a laser cutting system has been used an example of the laser processing system, however the disclosure is also applicable to other laser processing system, for example the laser processing devices listed hereinabove. Similarly, in the following disclosure, a laser cutting head 100 has been used an example of the laser processing head.

The laser processing system may include a laser beam generation source, also referred to as a laser source unit 140, for generating a laser beam L, also referred to as working laser beam L, and a laser processing head 100. The laser processing head includes a housing 110 within which optical elements for guiding the laser beam L may be disposed. The laser beam L is guided or directed to exit the housing 110, optionally through a nozzle 120 installed at the laser processing head 100, towards a target or workpiece W for carrying out various techniques such as cutting, machining, engraving, etc. on the workpiece W. While being transmitted from the laser source L to the workpiece W, the laser beam L may be optically altered e.g. focused onto the workpiece W, in the example of laser cutting device, by using one or more optical elements 5, such as lenses, which are installed in the laser processing head 100 using the holder 1 of the present technique.

The laser beam L may be fed to the laser processing head 100 through an optical fiber (not shown), the fiber end of the optical fiber being held in a fiber holder. The laser beam L emerging from the laser source unit 140 may be collimated by means of a collimating optics (not shown), such as a collimating lens, and thereafter be focused by means of a focusing optics, such as in this example focusing lens 5, onto the workpiece W.

The holder 1 may be installed within the housing 110 i.e. the holder 1 may be completely or partially inserted and housed inside the housing 10, or may be attached at an end of the housing 110 so the holder 1 is disposed at an outside surface of the housing 110, i.e. between the workpiece W and the housing 110.

The holder 1 may be fixed to the housing 110. The holder 1 may be removably or detachably attached to the laser processing head 100 i.e. the holder 1 may be attached and detached from the laser processing head 100.

In the example of Fig. 1, the holder 1 accommodates a focusing optic, e.g. a focusing lens. However, the present disclosure is not limited thereto. The holder 1 may be positioned at any positions of the laser processing head 100, and may be used for mounting one or more optical elements, in particular a lens, such as a collimating lens or a focusing lens, a protective glass or a beam shaping optical element, or the like. In the following description, the example of a lens will be used for the optical element. However, the present disclosure is not limited thereto.

In the present application, any references to directions or relative directions/positions, such as 'upper', 'lower', 'bottom', 'side', etc. are to be understood in relation to a direction of propagation of the laser beam or with respect to a working position of the laser processing head 100, i.e. with respect to a position in which the laser processing head 100 is disposed or positioned in a state of dispensing the laser beam L onto the workpiece W e.g. as shown in FIG 1.

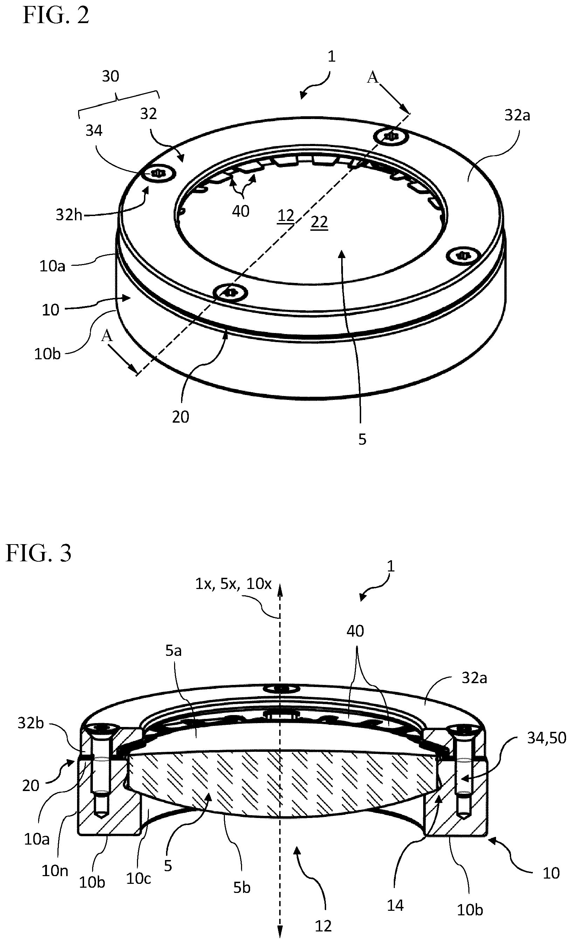

Hereinafter, with reference to FIGs 2 and 3 an exemplary embodiment of the holder 1 of the present technique is explained. FIG 2 presents a perspective view and FIG. 3 a cross-sectional view along the line A-A in FIG 2 of the holder 1.

The holder 1 has a socket 10, an annular spring part 20 and a fixing means 30 for fixing the spring part 20 to the socket 10. When the fixing means 30 fixes the spring part 20 to the socket 10, while the lens 5 is disposed between the socket 10 and the spring part 20, the lens 5 is held in place by the socket 10 and the spring part 20 fixed to the socket 10.

The holder 1 may have a tubular structure extending longitudinally along a central axis 1x of the holder 1 and the lens 5 may be mounted in a hollow of the tubular structure of the holder 1. As shown in FIG 2, the holder 1 may have a hollow cylindrical structure.

The holder 1 may optionally include at least one optical element, such as the lens 5, mounted therein. The lens 5 may be replaceably mounted in the holder 1, i.e. the fixing means 30 may be manipulated to fix the spring part 20 to the socket 10 and may also be manipulated to undo the fixing of the spring part 20 to the socket 10 i.e. remove the spring part 20 from the socket 10. Thus, the spring part 20 may be separated from the socket 10 and a lens e.g. the lens 5 may be mounted therebetween and/or a lens e.g. the lens 5 may be removed therefrom.

As shown in FIG. 3, the lens 5 may have a first optical surface 5a and a second optical surface 5b. The first optical surface 5a may be configured as a surface of the lens 5 at which the laser beam L is received into the lens 5 while the second optical surface 5b may be configured as a surface of the lens 5 from which the laser beam L is transmitted out of the lens 5. The first and the second optical surfaces 5a, 5b of the lens may be axially spaced apart, i.e. with respect to the optical axis 5x of the lens 5, also referred to as the lens axis 5x. The lens 5 may be installed in the holder 1 such that the lens axis 5x and the central axis 1x of the holder 1 are parallelly or overlappingly disposed.

The socket 10 may have a tubular or hollow structure e.g. a hollow cylindrical structure. The tubular or hollow structure of the socket 10 may extend longitudinally along a central axis 10x of the socket 10. The socket 10 may include an outer peripheral surface or wall 10n, i.e. an outer circumferential surface or an outer circumferential side surface or an external side surface, and an inner peripheral surface or wall 10c, i.e. an inner circumferential surface or an inner surface defining at least a part of a bore or a hollow of the socket 10.

The outer and inner peripheral surfaces 10n, 10c of the socket 10 may be disposed generally substantially parallel to each other. The outer and inner peripheral surfaces 10n, 10c of the socket 10 may be disposed generally substantially parallel to the lens axis 5x.

The socket 10 includes an aperture 12 and a seat 14. The seat 14 encircles or encompasses or peripherally-encloses or circuits around the aperture 12. The seat 14 is configured to receive the lens 5, i.e. the lens 5 is to be seated at or into the seat 14, such that the lens 5 is positioned at the aperture 12 i.e. such that the an optical surface, e.g. the second optical surface 5b of the lens 5 extends across the aperture 12, as shown in FIG. 3.

An optical surface 5a, 5b of the lens 5 may be understood as a surface of the lens 5 configured to receive light/laser beam L into the lens 5 or as a surface of the lens 5 configured to emanate light/laser beam L out of the lens 5. The aperture 12 may be understood as an opening or a gap such as a through-hole formed in the socket 10 and defining a space through which light or laser beam L passes. The seat 14 may be understood as a seat or site or location at which parts of the lens 5 are positioned and supported.

The socket 10 may also have a first surface 10a and a second surface 10b at which openings of the bore/hollow are disposed e.g. an upper or a top surface and a lower or a bottom surface of the socket 10. The first and the second surfaces 10a, 10b may be disposed generally substantially parallel to each other. The first and the second surfaces 10a, 10b may be disposed generally substantially perpendicular to the central axis of the socket 10x and/or to the lens axis 5x.

The first surface 10a of the socket 10 is referred to as the mounting surface 10a of the socket 10 and the second surface 10b of the socket 10 is referred to as the non-mounting surface 10b.

The annular disk-shaped spring part 20, hereinafter also referred to as the spring part 20, is positioned at the mounting surface 10a of the socket 10, for example at the upper/top surface of the socket 10.

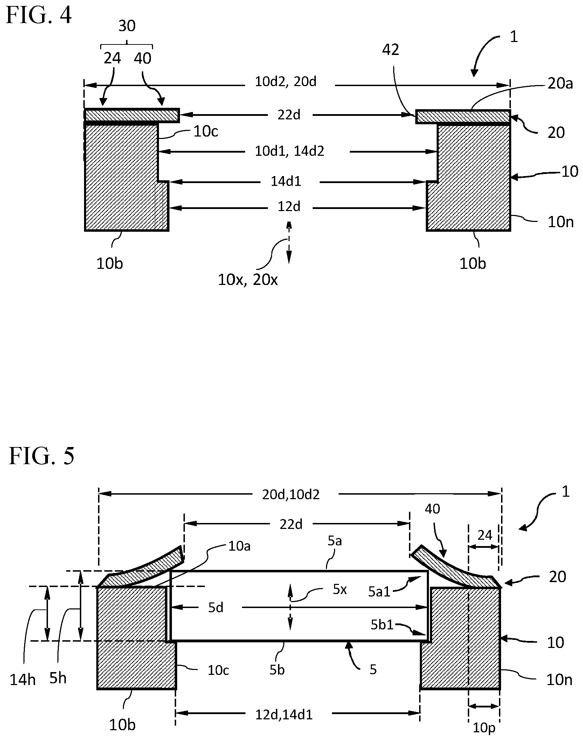

As shown in FIGs 4, 5, 7 and 8, the spring part 20 has a rim part or portion 24 and a plurality of cantilever spring elements 40 emanating from the rim portion 24 and extending radially (i.e. radius of the annular disk shape) inwards from the rim portion 24. Each cantilever spring element 40, hereinafter also referred to as the spring element 20, has a radially-inner edge 42 or side 42, preferably radially-innermost edge 42 or side 42. The radially-inner edges 42 of the spring elements 40 together define an opening 22 that overlaps the aperture 12, at least partially and preferably completely. In other words, with respect to the lens axis 5x, the aperture 12 and the opening 22 are axially spaced apart and overlap when viewed axially. In particular, the aperture 12 and the opening 22, or the socket 10 and the spring part 20, may be coaxially arranged.

The spring element 40 is termed as 'cantilever' because the spring element 40 is supported only at one end - a radially outer end of the spring element 40 i.e. the end of the spring element 40 adjoining the rim portion 24, is supported by the rim portion 24, while another end - a radially inner end e.g. the radially-inner edge 42 of the spring element 40 i.e. the end of the spring element 40 facing away from the rim portion 24, is unsupported or is free. In other words, the radially outer end of the spring element 20 is fixed or integrally formed with or emanating from the rim portion 24, whereas the radially inner end of the spring element 20 is free or unsupported. The cantilever spring element 40 is loaded when a bending moment is applied to the cantilever spring element 40, preferably at or near the radially inner end, which results into elastic deformation of the spring element 40 and the elastic force generated in the spring element 40 due to the bending moment is exerted by the spring element 40 - as pressing force - in a direction opposite to the direction of the bending moment. In other words, the cantilever spring element 40 is configured to provide an elastic pressing force when deformed or bent.

The fixing means 30 fixes the rim portion 24 of the spring part 20 to the mounting surface 10a of the socket 10 such that the cantilever spring elements 40 are disposed on an edge of the first optical surface 5a of the lens 5 and press the lens 5 towards the seat 5.

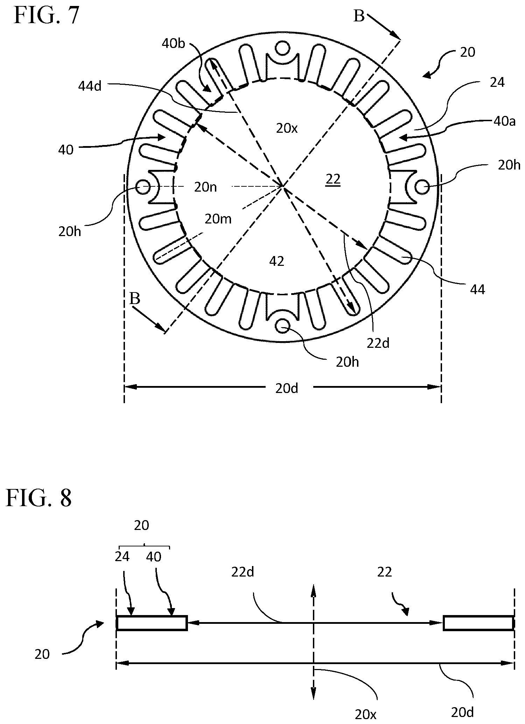

As shown in FIG 7, the spring elements 40 may be formed as finger-like projections having gaps or troughs 44 between adjacent spring elements 40. As shown in FIGs 7 and 8, the rim portion 24 and the cantilever spring elements 40 may be integrally formed, i.e. may be formed as one part. For example, by machining or cutting or preferably by etching a single flat plate the entire spring part 20 is formed as one part. The spring part 20 may be formed of a metallic material, such as spring steel or a steel alloy of 1.4310 or 1.4028. Optionally, as shown in FIG 7, the plurality of the cantilever spring elements 40 may have a radially symmetrical arrangement, with respect to the central axis 20x of the spring part 20 and/or with respect to the lens axis 5 and/or with respect to the central axis 10x of the socket 10.

Since, the cantilever spring elements 40 extending radially inwards from the rim portion 24 have gaps or troughs 44 thereinbetween - only parts, say contact parts (parts of the surface of the lens 5 directly in contact with the surfaces of the spring elements 40), of the optical surface 5a of the lens 5, at which the spring elements 40 are disposed, are in contact with the spring elements 40. Other parts, say non-contact parts, of the optical surface 5a of the lens 5, at which the spring elements 40 are disposed, intervening the contact parts of the lens 5 are not in direct contact or surface contact with the spring elements 40. Thus, lesser area of the optical surface 5a of the lens 5, at which the spring elements 40 are disposed is in contact with the spring elements 40 and therefore abrasion of the optical surface 5a is reduced.

FIG 4 shows an exemplary embodiment of the holder 1 in which the lens 5 is not seated at the seat 14 of the socket 10 i.e. shows a default state or unloaded state of the spring elements 40, and FIG 5 shows the holder 1 of FIG 4 when the lens 5 is installed at the seat 14 i.e. shows a deformed state or loaded state of the spring elements 40. As can be seen from FIGs 4 and 5, installation of the lens 5 in the socket 10, and more particularly seating of the lens 5 in the seat 14 of the socket 10, causes deformation of the spring elements 40.

As shown in FIG 4 in combination with FIGs 7 and 8, the spring part 20 may have a planar structure in the unloaded or default state, i.e. in the unmounted state of the lens 5. To explain further, as shown in FIG 4, the rim portion 24 and the cantilever spring elements 40 may have a planar structure perpendicular to a central axis 20x of the spring part 20. In other words, the rim portion 24 and the cantilever spring elements 40, in default or unloaded state of the spring part 20, may be formed as a flat annular disk i.e. in a plate shape having the opening 22 defined by the spring elements 40 and the troughs 44 between the spring elements 40 formed through the plate shape. In other words, in the default or unloaded state of the spring part 20 - upper and lower face/surface 20a, 20b of the spring part 20 together comprising the rim portion 24, the spring elements 40, the troughs or gaps 44 between the spring elements 40 and the opening 22 of the spring part 20 may be planarly disposed i.e. be being aligned along or parallel to a default plane of the spring part 20.

On the other hand as shown in FIG 5, in the deformed state or the loaded state, i.e. in the mounted state of the lens 5, that is under the influence of an external deforming force caused by the dimensions of the inserted lens 5, the free or unsupported end of the spring elements 40 may be deformed or bent out of the default plane. FIG. 5 shows the spring elements 40 bending upwards with respect to the mounting surface 10a of the socket 10 due to the lens 5 which protrudes above the mounting surface 10a.

The spring elements 40 may hold the lens 5 in the seat 14 while in an elastically deformed state or in a loaded state as shown in FIG 5, and therefore each spring element 40 constantly applies corresponding pressing force, which may be same as or different than the pressing forces applied by the other spring elements, to the lens 5 towards the seat 14 to hold/fix the lens 5 in a desired position.

Any movement of the lens 5 from the desired position or any installation misalignments may be overcome by the spring action or elastic action of the individual spring elements 40. In other words, since the cantilever spring elements 40 press the lens 5 towards the seat 14 elastically, i.e. in an elastic manner, any displacement of the lens 5 or fixing inaccuracies are overcome by the pressing force provided by the spring elements 40.

To explain further, since different spring elements 40 contact different circumferential parts of optical surface 5a of the lens 5, at which the spring elements 40 are disposed, different pressing forces may be applied to different circumferential parts of the lens 5.

As shown in FIG 7, the plurality of spring elements 40 may comprise at least a first spring element 40a and at least a second spring element 40b that contact a first circumferential part (not shown) and a second circumferential part (not shown) of the optical surface 5a of the lens 5, respectively. The first and the second circumferential parts of the lens 5 are different surface regions on the optical surface 5b of the lens 5 at which the spring elements 40 are disposed and/or are different sections of an edge 5a1 (shown in FIG 5) of the optical surface 5a of the lens 5 at which the spring elements 40 are disposed. Consequently, the first and the second spring elements 40a, 40b apply a first and a second pressing force to the first and the second circumferential parts of the lens 5, respectively. The first pressing force may be equal to or different than the second pressing force. In other words, the spring part 20 may act as a mechanical damper. Consequently, if the first and the second circumferential parts of the lens 5 are improperly aligned with respect to the seat 14, for example during installation or maintenance operation, or get misaligned during use of the laser processing device, the first and the second spring elements 40a, 40b correct the improper alignment or the misalignment of the lens 5 by their respective spring action.

Also, if one, say the first, circumferential part of the lens 5 is improperly aligned with respect to the seat 14 or get misaligned during use of the laser processing device, while another, say the second, circumferential part of the lens 5 is properly aligned or is maintained in such proper alignment during use of the laser processing device, then the elastic loading of the first spring element 40a is greater or gets further increased and as a result the first spring element 40a presses the first circumferential part of the lens 5 further into or back into the seat 14 - thereby achieving or restoring proper alignment of the lens 5, while the second spring element 40b maintains the alignment at the second circumferential part of the lens.

Thus, as shown in FIGs 4 and 5, the rim portion 24 and the cantilever spring elements 40 may have a planar arrangement in the unloaded state or default state of the spring part 20 and may subsequently assume a non-planar arrangement in the loaded state or deformed state of the spring part 20.

Alternatively (not shown), the rim portion 24 and the cantilever spring elements 40 may have a non-planar structure i.e. rim portion 24 is disposed in a default plane perpendicular to the central axis 20x of the spring part 20 while the free ends of the spring elements 40 are disposed outside the default plane - in default or unloaded state of the spring part 20. While in the deformed or the loaded state, the rim portion 24 is maintained in the default plane perpendicular to the central axis 20x of the spring part 20 while the free ends of the spring elements 40, which were disposed outside the default plane, are moved further away from the default plane - i.e. the spring elements 40 are deformed or bent further away from the default plane.

The 'default' or 'unloaded' state of the spring part 20 may be understood as the physical state or form or shape or configuration of the spring part 20 when no external deforming force acts on the spring elements 40. On the other hand, 'deformed' or 'loaded' state of the spring part 20 may be understood as the physical state or form or shape or configuration of the spring part 20 when the spring part 20, and particularly one or more of the spring elements 40 of the spring part 20 are under the influence of an external deforming force i.e. under an influence of an external force which deforms the spring elements 40 - e.g. due to installation of the lens 5 at the seat 14.

As can be seen from FIGs 4 and 5, the dimensions of the socket 10, particularly the arrangement/position of the seat 14 with respect to the mounting surface 10a of the socket 10 may be such that when the lens 5 is inserted into the socket 10 i.e. received into the seat 14, a part of the lens 5 protrudes beyond the mounting surface 5a of the socket. That is, the distance along the optical axis 5x of the lens 5 or along the central axis 10x of the socket 10 between the seat 14 and the mounting surface 10a is larger than a thickness of the edge of the lens 5, i.e. the thickness at the circumference of the lens. This protruding part of the lens 5 thus causes the deformation of the spring elements 40 as shown in FIG. 5.

In an example of mounting the lens 5 into the holder 1, first the lens 5 may be inserted into the socket 10 and is seated at the seat 14, while the spring part 20 is in a removed state i.e. is not positioned atop the mounting surface 10a. As a result, an edge or a corner 5b1 of the second optical surface 5b of the lens 5 sits in the seat 14, the second optical surface 5b is positioned at the aperture 12 of the socket 10 and the first optical surface 5a of the lens 5 protrudes above the mounting surface 10a of the socket 10.

Above described protruding arrangement of the first optical surface 5a of the lens 5 above the mounting surface 10a of the socket 10 may be achieved by dimensioning the socket 10 such that a height 14h or distance 14h between the seat 14 and the mounting surface 10a of the socket 10, measured parallel to the central axis 10x of the socket 10 or to the lens axis 5x, is less than a height 5h or thickness 5h of the lens 5 measured at a side of the lens 5 i.e. at the non-optical surface of the lens 5 or the surface of the lens 5 that is parallelly aligned with respect to the lens axis 5x or a rim of the lens 5. The height 5h or thickness 5h of the lens 5 measured at a side of the lens 5 may also be understood as a separation distance between the circumferential edges/corners 5a1, 5b1 of the first and the second optical surfaces 5a, 5b of the lens 5 measured parallel to the lens axis 5x. The height 14h or distance 14h may be measured along the inner peripheral surface 10c of the socket 10.

After the lens 5 has been positioned at the seat 14, the spring part 20 is overlaid atop the socket 10 and the lens 5. As shown in FIG. 5 the spring part 20 is arranged such that the rim portion 24 is at or atop the mounting surface 10a of the socket 10 while the free end of the spring element 40 is arranged at or over the first surface 5a of the lens 5.

Thereafter, when the fixing means 30 fixes the rim portion 24 to the socket 10, the rim portion 24 contacts the mounting surface 10a of the socket 10 and the spring elements 40 are deformed due to the contact with the first optical surface 5a of the lens 5, due to the contact with the edge 5a1 of the first optical surface 5a of the lens 5. Thus, the cantilever spring elements 40 are disposed to only contact the edge 5a1 of the lens 5 - consequently the spring part 20 holds the lens 5 in desired position by only contacting the edge 5a1 of the lens 5. The rim portion 24 is spaced apart from the lens 5.

As depicted in FIGs 4 and 5, an outer diameter 20d of the spring part 20 may be equal to an outer diameter 10d2 of the mounting surface 10a of the socket 10. In other words, the spring part 20, and particularly the rim portion 24 of the spring part 20 may be flush with the outer peripheral surface 10n of the socket 10.

Furthermore, as depicted in FIG 5, the outer diameter 20d of the spring part 20 may be greater than a diameter 5d of the lens 5.

Also, as depicted in FIG 5, when fixed by the fixing means 30, the rim portion 24 of the spring part 20 may be disposed on or atop and fixed to an outer peripheral portion 10p of the mounting surface 10a of the socket 10.

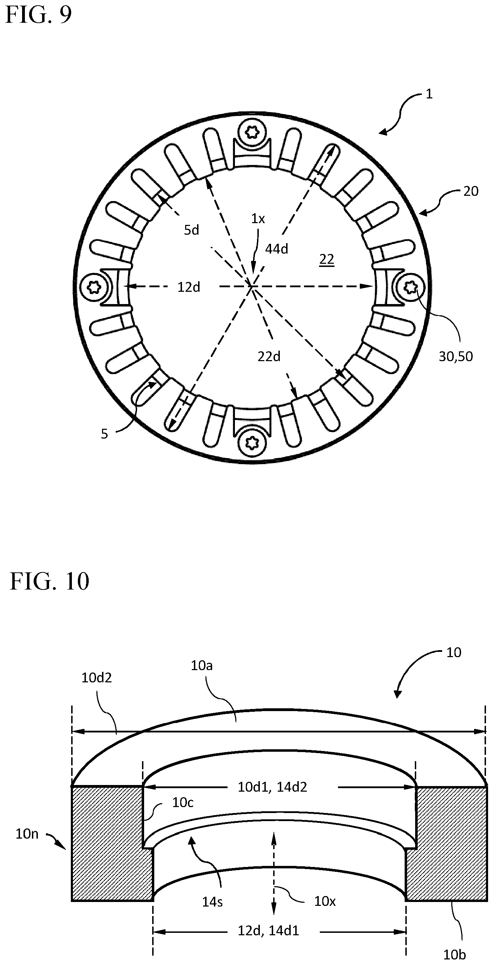

As also depicted in FIGs 4, 5 and in FIG 9, a diameter 22d of the opening 22 defined by the cantilever spring elements 40 may be less than the diameter 5d of the lens 5. The radial lengths of the cantilever spring elements 40 are such that the diameter 22d of the opening 22 may be less than the diameter 5d of the lens 5 in the default state of the spring part 20, as depicted in FIG 4, as well as in deformed state of the spring part 20, as depicted in FIGs 4 and 9.

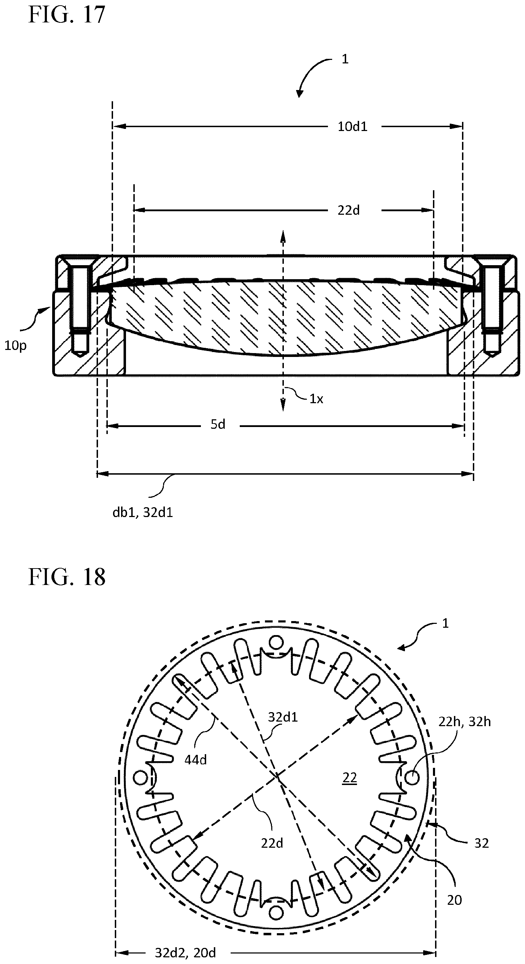

Furthermore, as depicted in FIGs 3-5, and also in FIG 17, the seat 14 is formed at the inner peripheral surface 10c of the socket 10. The seat 14 may have an inner diameter 14d1 and an outer diameter 14d2. The inner diameter 14d1 of the seat 14 may define the diameter 12d of aperture 12 i.e. the inner diameter 14d1 of the seat 14 may be equal to the diameter 12d of aperture 12. The inner diameter 14d1 of the seat 14 may be smaller than or less than the diameter 5d of the lens 5, whereas the outer diameter 14d2 of the seat 14 may be greater than the diameter 5d of the lens 5. The outer diameter 14d2 of the seat 14 may be same as an inner diameter 10d1 i.e. diameter of the opening or hollow through which the lens 5 is inserted into the socket 10 to be seated at the seat 14, of the mounting surface 10a.

The fixing means 30 may be formed as detachable fixing means such as a clamping means, a screw means, a nut and bolt means, that can be attached and detached, or alternatively may be formed as a permanent fixing means such as a welded means or a brazed means or a riveted means.

Hereinafter, two general embodiments of the fixing means 30 are explained with reference to the figures.

A first general embodiment of the fixing means 30 may be understood by referring to FIGs 4, 5, 7 and 9. In this embodiment, the spring part 20 comprises a plurality of spring part holes 20h, for example spring part screw holes 20h, that are through-holes formed in the spring part 20, and preferably in the rim portion 24 of the spring part 20. The fixing means 30 comprises a plurality of mechanical fasteners 50 e.g. nuts or screws 50, as shown in FIG 9, which are inserted into the spring part holes 20h to fasten/attach the rim portion 24 of the spring part 20 to the mounting surface 10a of the socket 10. The mounting surface 10a of the socket 10 includes mounting surface holes 10h, e.g. mounting surface screw holes (not depicted), that correspond to the spring part holes 20h, i.e. the spring part holes 20h are formed to overlap the mounting surface holes 10h when the spring part 20 is assembled/aligned with the mounting surface 10a of the socket 10. The fasteners 50 may be inserted into the spring part holes 20h and subsequently into the mounting surface holes 10h, and may engage with the mounting surface holes 10h (e.g. with the mounting surface screw holes) or with a corresponding mating fastener (not shown) such as nut, to fasten/attach/fix the spring part 20 to the socket 10. Optionally, the mounting surface holes 10h are blind holes and may be threaded to engage with threads on the fastener 50 i.e. may be formed as mounting surface screw holes.

A second general embodiment of the fixing means 30 may be understood by referring to FIGs 2, 3, 6, 7 and 17. In this embodiment, the fixing means 30 comprises a pressing ring 32 configured to be positioned on the rim portion 24 of the spring part 20; and a fixing element 34 configured to fix the pressing ring 32 to the socket 10 thereby pressing and/or fastening the rim portion 24 of the spring part 20 to the mounting surface 10a of the socket 10. It may be noted that, unlike the second general embodiment, the first general embodiment mentioned hereinabove does not include the pressing ring 32.

As shown in FIG 7, optionally the spring part holes 20h may be positioned radially inwards of troughs 44 formed between the cantilever spring elements 40, in case of both the first and second general embodiment of the described hereinabove. For example, as shown in FIG 7, a radial distance 20n of the spring part hole 20h is less than a radial distance 20m of the trough 44, particularly of a bottom or boundary of the trough 44 adjoining the rim portion 24, when measured from the central axis 20x of the spring part 20, or from a center of the spring part 20.

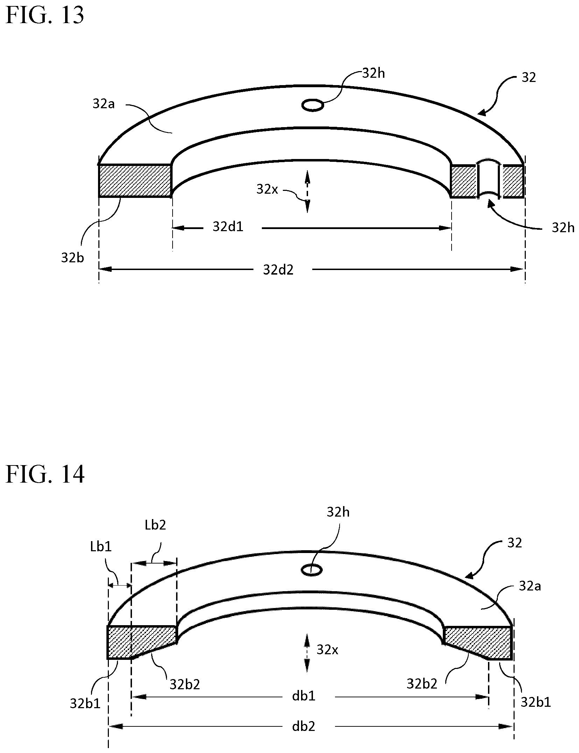

Continuing with the second general embodiment, as shown in FIG 2 and also in FIGs 13 - 16, the pressing ring 32 may include a plurality of pressing ring holes 32h, for example pressing ring screw holes 32h. The fixing element 34 may comprises a plurality of mechanical fasteners 50, e.g. nuts or screws 50, which are inserted into the pressing ring holes 32h to fasten/attach/fix the rim portion 24 of the spring part 20 to the mounting surface 10a of the socket 10. As shown in FIG 7, the spring part 20 comprises a plurality of spring part holes 20h which correspond to pressing ring holes 32h, i.e. the pressing ring holes 32h are formed to overlap the spring part holes 20h when the pressing ring 32 is assembled/aligned with the spring part 20. The fasteners 50 may be inserted into the pressing ring holes 32h and subsequently may optionally pass through the spring part holes 20h. The mounting surface 10a of the socket 10 includes mounting surface holes 10h that correspond to the spring part holes 20h and/or to the pressing ring holes 32h, i.e. the spring part holes 20h and/or to the pressing ring holes 32h are formed to overlap the mounting surface holes 10h when the spring part 20 is assembled/aligned with the mounting surface 10a of the socket 10.

Simply put, the pressing ring holes 32h, the spring part holes 20h and the mounting surface holes 10h may be aligned with each other when the spring part 20 is assembled atop the mounting surface 10a and the pressing ring 32 is assembled atop the spring part 20. The fasteners 50 may be inserted in the pressing ring holes 32h and may pass through the spring part holes 20h and subsequently into the mounting surface holes 10h, and may engage with the mounting surface holes 10h (e.g. with the mounting surface screw holes) or with a corresponding mating fastener (not shown) such as nut, to fix the spring part 20 to the socket 10. Optionally, the mounting surface holes 10h are blind holes and may be threaded to engage with threads on the fastener 50 i.e. may be formed as mounting surface screw holes.

FIGs 18 - 20 depict different relative positions of the pressing ring 32 with respect to the underlying spring part 20. The pressing ring 32 has been depicted in dotted lines to clearly show the spring part 20 to facilitate understanding of the relative positions. It may also be noted that an outer circumferential edge of the pressing ring 32 having an outer diameter 32d2 may be equal to the outer diameter 20d of the spring part 20 i.e. the outer circumferential edge of the pressing ring 32 and the outer circumferential edge of the spring part 20 may overlap or coincide. However, in the FIGs 18 - 20 in order to enable distinguishing of the pressing ring 32 and the spring part 20, the outer circumferential edge of the pressing ring 32 is shown to be radially outwards of the the outer circumferential edge of spring part 20.

FIGs 18 - 20 are primarily used for depicting the relative position of an inner circumferential edge of the pressing ring 32 having an inner diameter 32d1 relative to the spring part 20.

As shown in FIG 18, the inner diameter 32d1 of the pressing ring 32, i.e. a diameter of the opening or though-hole formed in the pressing ring 32, may be greater than the diameter 22d of the opening 22 defined by the cantilever spring elements 40. However, the inner diameter 32d1 of the pressing ring 32 may be less than the diameter 44d of a circumference defined by the troughs 44 formed between the cantilever spring elements 40. Furthermore, optionally, the outer diameter 32d2 may be equal to the outer diameter 20d of the spring part 20.

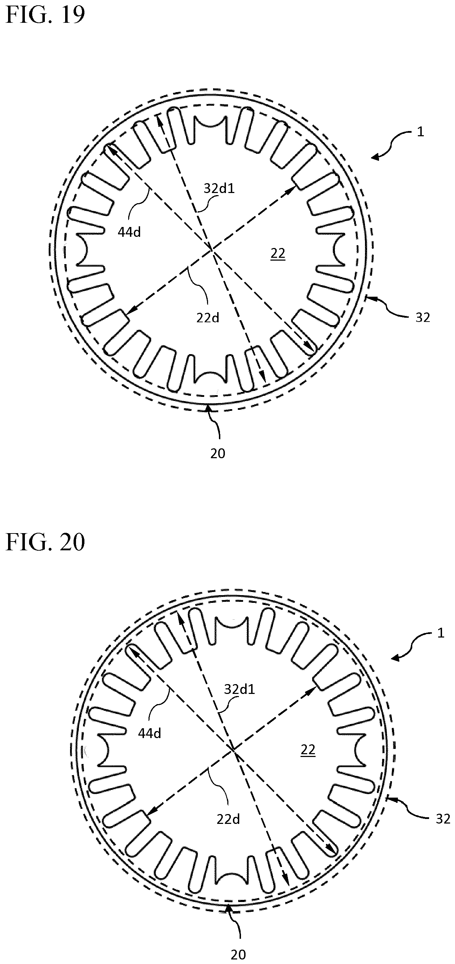

Alternatively, as shown in FIG 19, the inner diameter 32d1 of the pressing ring 32 may be greater than the diameter 22d of the opening 22 defined by the cantilever spring elements 40. However, the inner diameter 32d1 of the pressing ring 32 may be equal to the diameter 44d of the circumference defined by the troughs 44 formed between the cantilever spring elements 40. Furthermore, optionally, the outer diameter 32d2 may be equal to the outer diameter 20d of the spring part 20.

As another alternative, as shown in FIG 20, the inner diameter 32d1 of the pressing ring 32 may be greater than the diameter 22d of the opening 22 defined by the cantilever spring elements 40, and furthermore, may be greater than the diameter 44d of the circumference defined by the troughs 44 formed between the cantilever spring elements 40. The inner diameter 32d1 may be smaller than the outer diameter 20d of the spring part 20. Optionally, the outer diameter 32d2 may be equal to the outer diameter 20d of the spring part 20.

Hereinafter, with reference to FIGs 13 - 16 various embodiments of the pressing ring 32 are depicted. The pressing ring 32 may have a first surface 32a and a second surface 32b. The second surface 32b may be configured to face the spring part 20 when the pressing ring 32 is disposed at i.e. on the spring part 20. The first surface 32a may be configured to face away from the spring part 20 when the pressing ring 32 is disposed at i.e. on the spring part 20.

As shown in FIG 13, the first and the second surface 32a, 32b may be flat surfaces and the pressing ring 32 may have a rectangular cross-section. When the pressing ring 32 is laid atop the spring part 20, thus the entire second surface 32b may contact the spring part 20. The first and the second surfaces 32a, 32b may be disposed perpendicular to a central axis 32x of the pressing ring 32.

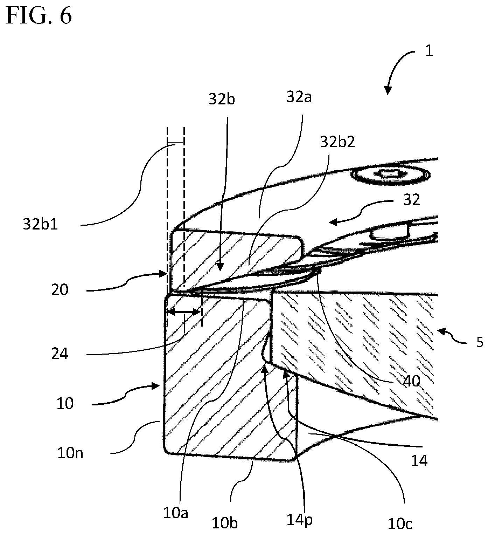

Alternatively, as shown in FIGs 14 - 16, the second surface 32b of the pressing ring 32 may include a flat region 32b 1 disposed perpendicular to the central axis 32x of the pressing ring 32 and a non-flat region 32b2 disposed radially inwards of the flat region 32b1. When the pressing ring 32 is laid atop the spring part 20, the flat region 32b 1 is configured to contact the rim portion 24 of the spring part 20 whereas the non-flat region 32b2 is configured to be spaced apart from the spring part 20 - for example as can be understood by referring to FIG. 14 in combination with FIG. 6.

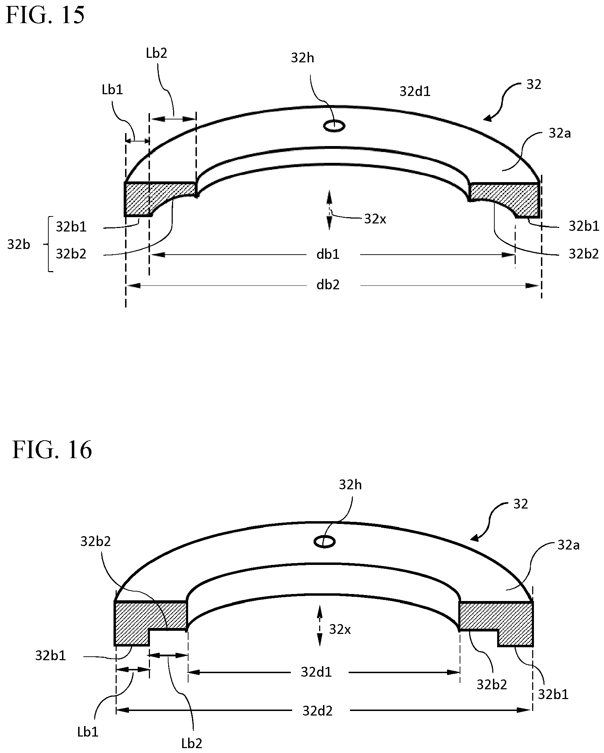

The non-flat region 32b2 may be formed to have a variety of shapes, for example, but not limited to - the non-flat region 32b2 may be formed as an inclined plane as shown in FIG. 14, or may be formed as a curved surface as shown in FIG. 15, or may be formed as a stepped surface as shown in FIG. 16. In general, the flat region 32b1 may be planar and may be perpendicular to the central axis 32x whereas the non-flat region 32b2 is disposed outside the plane of the flat region 32b1.

A radial length Lb1 of the flat region 32b1 may be less than a radial length Lb2 of the non-flat region 32b2. The lengths Lb1 and Lb2 are measured along a plane perpendicular to the central axis 32x of the pressing ring 32.

When the pressing ring 32 comprises the flat region 32b1 and the non-flat region 32b2, the inner diameter 32d1 of the pressing ring 32, as referred to in FIGs 18 - 20, may be understood as a diameter db1 i.e. an inner diameter db1 of the flat region 32b1, whereas the outer diameter 32d2 of the pressing ring 32, as referred to in FIGs 18 - 20, may be understood as a diameter db2 i.e. an outer diameter db2 of the flat region 32b1.

As shown in FIG. 6 and in FIG 17, the fixing element 34 (although the fixing element 34 is not depicted in FIG. 6), such as the fasteners 50 e.g. the screws 50, may fix the rim portion 24 of the spring part 20 to the outer peripheral portion 10p of the mounting surface 10a of the socket 10, and may fix the flat region 32b1 of the pressing ring 32 to the rim portion 24 of the spring part 20.

As depicted in FIG. 18, the flat region 32b1 is configured to contact the troughs 44 formed between the cantilever spring elements 40. Thus, a portion of the trough 44, a radially outer portion of the spring element 40 adjoining the rim portion 24, and at least a part of the rim portion 24 of the spring part 20 may be disposed between, i.e. sandwiched between, the mounting surface 10a of the socket 10 and the flat region 32b 1 of the pressing ring 32.

Hereinafter, with reference to FIGs 10 - 12 various embodiments of the seat 14 are depicted. The seat 14 may be formed at the inner peripheral surface 10c of the socket 10, as also depicted in FIG. 3.

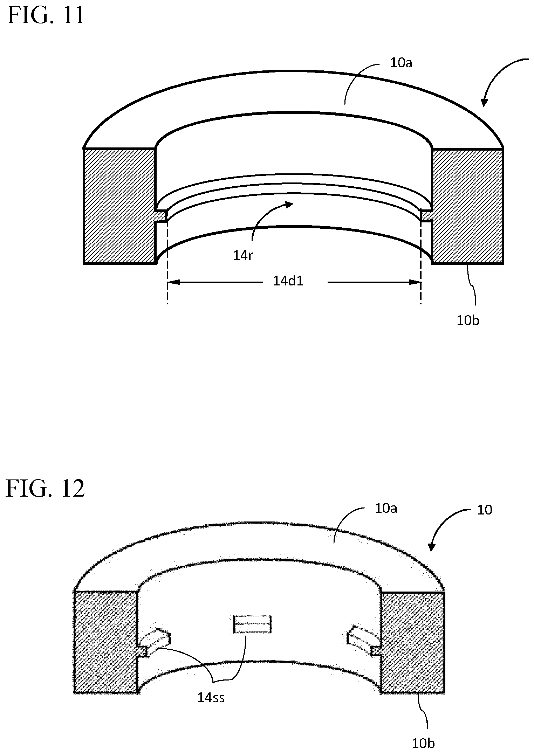

As shown in FIG 10, the seat 14 may be formed as a step portion 14s in the inner peripheral surface 10c of the socket 10. Alternatively, as shown in FIG 11, the seat 14 may be formed as a lip or protruding rib 14r emanating from the inner peripheral surface 10c of the socket 10.

As shown in FIG 10, the step portion 14s may be formed continuously around the aperture 12 i.e. may be formed as a continuous structure which completely encircles the aperture 12. Similarly, as shown in FIG 11, the protruding rib 14r may be formed continuously around the aperture 12 i.e. may be formed as a continuous structure which completely encircles the aperture 12.

Alternatively, as shown in FIG 11, the seat 14 may be formed in parts i.e. may be formed of a plurality of seat segments 14ss. The seat segments 14ss may together encircle the aperture 12. The plurality of seat segments 14ss may include at least three seat segments 14ss. The seat segments 14ss may have a radially symmetrical arrangement around the aperture 12.

Furthermore, as depicted in FIGs 3-5, and also in FIG 17, a diameter 14d, more precisely the inner diameter 14d1 of the seat 14 and/or the diameter 22d of the aperture 12 of the socket 10 may be less than the diameter 5d of the lens 5. Also, the inner diameter 10d1 of the mounting surface 10a may be greater than or equal to the diameter 5d of the lens 5.

As shown in FIG 6, a pocket 14p or groove 14 may be formed in the inner peripheral surface 10c adjacent the seat 14. The pocket 14p may extend circumferentially at the inner peripheral surface 10c and completely encircle the seat 14. As a result of the pocket 14p, the side surface of the lens 14, i.e. the rim of the lens 14 or the non-optical surface of the lens 14 when installed at the seat 14 is removed or spaced apart from the inner peripheral surface 10c of the socket 10. This reduces friction and thus abrasion to the side surface of the lens 5.

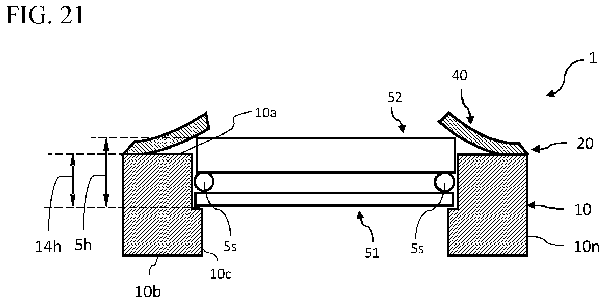

FIG. 21 shows a cross-sectional view of another exemplary embodiment of the holder 1 having a plurality of optical elements e.g. plurality of lenses mounted therein. FIG. 21 shows only two optical elements 5 in the plurality of optical elements, however the present technique is not limited thereto. The plurality of optical elements may include more than two optical elements, for example three, four, five, and so on and so forth, optical elements.

The plurality of optical elements may include at least two optical elements of same type for example both the optical elements may be lenses.

The plurality of optical elements may include at least two optical elements of different type for example one of the optical elements may be a lens and other of the optical elements may be a transparent cover plate i.e. a lens cover.

As shown in FIG 21, one of the optical elements 5, say a first optical element 51, for example an optical lens or a lens cover may be seated at the seat 14. A spacer 5s may be disposed on the first optical element 51. The spacer 5 may be have an annular shape, for example a gasket.

Another of the optical elements 5, say a second optical element 52, for example an optical lens may be disposed on the spacer 5s. The spring elements 40 may be disposed on the second optical element 52 for pressing the second optical element 52 towards the spacer 5s which in turn presses the first optical element 52 towards the seat 14.

When the optical element 5 includes the plurality of optical elements 51, 52, the thickness 5h of the optical element 5 at a circumference thereof, may be understood as a combined or total or net thickness of all the optical elements 51, 52 at their respective circumference thereof, and may optionally include a thickness of one or more spacers 5s at their circumference thereof, which are disposed between or sandwiched between the seat 14 and the spring elements 40.

While the present technique has been described in detail with reference to certain embodiments, it should be appreciated that the present technique is not limited to those precise embodiments. Rather, in view of the present disclosure which describes exemplary modes for practicing the invention, many modifications and variations would present themselves, to those skilled in the art without departing from the scope of the appended claims. The scope of the invention is, therefore, indicated by the following claims rather than by the foregoing description.

## Claims

1. A holder (1) for mounting an optical element (5) to a laser machining head (100), the holder (1) comprising:
- a socket (10) comprising an aperture (12) and a seat (14) encircling the aperture (12), wherein the seat (14) is configured to receive the optical element (5) such that the optical element (5) is positioned at the aperture (12);
- an annular spring part (20) configured to be positioned at a mounting surface (10a) of the socket (10) and comprising a rim portion (24) and a plurality of cantilever spring elements (40) extending radially inwards from the rim portion (24), wherein radially-inner edges (42) of the cantilever spring elements (40) define an opening (22) that overlaps the aperture (12); and
- a fixing means (30) configured to fix the rim portion (24) of the spring part (20) to the mounting surface (10a) of the socket (10) such that the cantilever spring elements (40) are disposed on the optical element (5) for pressing the optical element (5) towards the seat (14), when the optical element (5) is received at the seat (14);
wherein the holder (1) further comprises the optical element (5) having a first optical surface (5a) and a second optical surface (5b);
wherein the second optical surface (5b) is positioned at the aperture (12) and the first optical surface (5a) protrudes outwardly above the mounting surface (10a) of the socket (10); and
wherein the cantilever spring elements (40) are disposed at the first optical surface (5a) of the optical element (5) pressing the optical element (5) towards the seat (14);
**characterized in that**
the cantilever spring elements (40) only contact an edge (5a1) of the optical element (5).

2. The holder (1) according to claim 1,
wherein the rim portion (24) and the cantilever spring elements (40) have a planar structure perpendicular to a central axis (20x) of the spring part (20) in an unmounted state of the optical element (5); and/or
wherein the plurality of the cantilever spring elements (40) have a radially symmetrical arrangement.

3. The holder (1) according to any one of the preceding claims,
wherein an outer diameter (20d) of the spring part (20) is equal to an outer diameter (10d2) of the mounting surface (10a) of the socket (10) and/or is greater than a diameter (5d) of the optical element (5).

4. The holder (1) according to any one of the preceding claims, wherein a diameter (5d) of the optical element (5) is greater than a diameter (22d) of the opening (22) defined by the cantilever spring elements (40) and than a diameter (12d) of the aperture, respectively.

5. The holder (1) according to any one of the preceding claims, wherein the fixing means (30) comprises:
- a pressing ring (32) configured to be positioned on the rim portion (24) of the spring part (20); and
- a fixing element (34) configured to fix the pressing ring (32) to the socket (10) to fix the rim portion (24) of the spring part (20) to the mounting surface (10a) of the socket (10).

6. The holder (1) according to claim 5,
wherein an inner diameter (32d1) of the pressing ring (32) is greater than a diameter (22d) of the opening (22) defined by the cantilever spring elements (40); and/or
wherein an inner diameter (32d1) of the pressing ring (32) is equal to or less than a diameter (44d) of a circumference defined by troughs (44) formed between the cantilever spring elements (40).

7. The holder (1) according to claim 5 or 6, wherein the pressing ring (32) comprises a first surface (32a) facing away from the rim portion (24) of the spring part (20) and a second surface (32b) facing the rim portion (24) of the spring part (20);
wherein the second surface (32b) of the pressing ring (32) comprises a flat region (32b1) perpendicular to a central axis (32x) of the pressing ring (32) and a non-flat region (32b2) disposed radially inwards of the flat region (32b 1); and
wherein the flat region (32b 1) is configured to contact the rim portion (24) of the spring part (20) and the non-flat region (32b2) is configured to be spaced apart from the spring part (20).

8. The holder (1) according to claim 7, wherein the flat region (32b1) is configured to contact troughs (44) formed between the cantilever spring elements (40).

9. The holder (1) according to any one of claims 5 to 8,
wherein the pressing ring (32) comprises a plurality of pressing ring holes (32h);
wherein the mounting surface (10a) comprises a plurality of mounting surface holes (10h); and
wherein the fixing element (34) comprises a plurality of fasteners (50) for being inserted into the pressing ring holes (32h) to fix the rim portion (24) of the spring part (20) to the mounting surface (10a) of the socket (10).

10. The holder (1) according to claim 9, wherein the spring part (20) comprises a plurality of spring part holes (20h) configured to receive the fasteners (50) inserted into the pressing ring holes (32h).

11. The holder (1) according to any one of claims 1 to 4,
wherein the spring part (20) comprises a plurality of spring part holes (20h); and
wherein the fixing means (30) comprises a plurality of fasteners (50) for being inserted into the spring part holes (20h) to fix the rim portion (24) of the spring part (20) to the mounting surface (10a) of the socket (10).

12. The holder (1) according to claim 10 or 11, wherein the spring part holes (20h) are radially inwards of troughs (44) formed between the cantilever spring elements (40).

13. The holder (1) according to any one of the preceding claims,
wherein the seat (14) is formed as a step portion (14s) at an inner circumferential surface (11a) of the socket (10); and/or
wherein an inner diameter (14d1) of the seat (14) and/or a diameter (22d) of the aperture (12) of the socket (10) is less than a diameter (5d) of the optical element (5); and/or
wherein an inner diameter (10d1) of the mounting surface (10a) is greater than or equal to a diameter (5d) of the optical element (5).

14. A laser processing head (100), comprising a holder (1), wherein the holder (1) is according to any one of the preceding claims.

## Patentansprüche

1. Halter (1) zum Anbringen eines optischen Elements (5) an einem Laserbearbeitungskopf (100), wobei der Halter (1) Folgendes umfasst:
- eine Aufnahme (10), die ein Loch (12) und einen Sitz (14), der das Loch (12) umgibt, aufweist, wobei der Sitz (14) konfiguriert ist, das optische Element (5) aufzunehmen, derart, dass das optische Element (5) am Loch (12) angeordnet ist;
- eine ringförmige Federkomponente (20), die konfiguriert ist, an einer Montagefläche (10a) der Aufnahme (10) angeordnet zu sein und einen Kranzabschnitt (24) und mehrere freitragende Federelemente (40), die sich vom Kranzabschnitt (24) radial nach innen erstrecken, umfasst, wobei die radial innenliegenden Kanten (42) der freitragenden Federelemente (40) eine Öffnung (22) definieren, die das Loch (12) überlappt; und
- ein Befestigungsmittel (30), das konfiguriert ist, den Kranzabschnitt (24) der Federkomponente (20) an der Montagefläche (10a) der Aufnahme (10) zu befestigen, derart, dass die freitragenden Federelemente (40) zum Drücken des optischen Elements (5) in Richtung des Sitzes (14) auf dem optischen Element (5) angeordnet sind, wenn das optische Element (5) am Sitz (14) aufgenommen ist;
wobei der Halter (1) ferner das optische Element (5) umfasst, das eine erste optische Fläche (5a) und eine zweite optische Fläche (5b) aufweist;
wobei die zweite optische Fläche (5b) am Loch (12) angeordnet ist und die erste optische Fläche (5a) über der Montagefläche (10a) der Aufnahme (10) nach außen vorsteht; und
wobei die freitragenden Federelemente (40) an der ersten optischen Fläche (5a) des optischen Elements (5) angeordnet sind, wobei das optische Element (5) in Richtung des Sitzes (14) gedrückt wird;
**dadurch gekennzeichnet, dass**
die freitragenden Federelemente (40) lediglich eine Kante (5a1) des optischen Elements (5) berühren.

2. Halter (1) nach Anspruch 1,
wobei der Kranzabschnitt (24) und die freitragenden Federelemente (40) in einem Zustand, in dem das optische Element (5) nicht angebracht ist, eine ebene Struktur aufweisen, die zu einer Mittelachse (20x) der Federkomponente (20) senkrecht ist; und/oder
wobei die mehreren freitragenden Federelemente (40) eine radial symmetrische Anordnung aufweisen.

3. Halter (1) nach einem der vorhergehenden Ansprüche,
wobei ein Außendurchmesser (20d) der Federkomponente (20) gleich einem Außendurchmesser (10d2) der Montagefläche (10a) der Aufnahme (10) ist und/oder größer als ein Durchmesser (5d) des optischen Elements (5) ist.

4. Halter (1) nach einem der vorhergehenden Ansprüche, wobei ein Durchmesser (5d) des optischen Elements (5) jeweils größer als ein Durchmesser (22d) der Öffnung (22), die durch die freitragenden Federelemente (40) definiert ist, und als ein Durchmesser (12d) des Lochs ist.

5. Halter (1) nach einem der vorhergehenden Ansprüche, wobei das Befestigungsmittel (30) Folgendes umfasst:
- einen Pressring (32), der konfiguriert ist, auf dem Kranzabschnitt (24) der Federkomponente (20) angeordnet zu sein; und
- ein Befestigungselement (34), das konfiguriert ist, den Pressring (32) an der Aufnahme (10) zu befestigen, derart, dass der Kranzabschnitt (24) der Federkomponente (20) an der Montagefläche (10a) der Aufnahme (10) befestigt ist.

6. Halter (1) nach Anspruch 5,
wobei ein Innendurchmesser (32d1) des Pressrings (32) größer als ein Durchmesser (22d) der Öffnung (22) ist, die durch die freitragenden Federelemente (40) definiert ist; und/oder
wobei ein Innendurchmesser (32d1) des Pressrings (32) kleiner oder gleich einem Durchmesser (44d) eines Umfangs ist, der durch Mulden (44) definiert ist, die zwischen den freitragenden Federelementen (40) gebildet sind.

7. Halter (1) nach Anspruch 5 oder 6, wobei der Pressring (32) eine erste Fläche (32a), die vom Kranzabschnitt (24) der Federkomponente (20) abgewandt ist, und eine zweite Fläche (32b), die dem Kranzabschnitt (24) der Federkomponente (20) zugewandt ist, umfasst;
wobei die zweite Fläche (32b) des Pressrings (32) einen ebenen Bereich (32b1), der zu einer Mittelachse (32x) des Pressrings (32) senkrecht ist, und einen nicht ebenen Bereich (32b2), der in Bezug auf den ebenen Bereich (32b1) radial nach innen angeordnet ist, umfasst; und
wobei der ebene Bereich (32b1) konfiguriert ist, den Kranzabschnitt (24) der Federkomponente (20) zu berühren und der nicht ebene Bereich (32b2) konfiguriert ist, von der Federkomponente (20) beabstandet zu sein.

8. Halter (1) nach Anspruch 7, wobei der ebene Bereich (32b 1) konfiguriert ist, Mulden (44), die zwischen den freitragenden Federelementen (40) gebildet sind, zu berühren.

9. Halter (1) nach einem der Ansprüche 5 bis 8,
wobei der Pressring (32) mehrere Pressringlöcher (32h) umfasst;
wobei die Montagefläche (10a) mehrere Montageflächenlöcher (10h) umfasst; und
wobei das Befestigungselement (34) mehrere Befestigungskomponenten (50) zum Einsetzen in die Pressringlöcher (32h), um den Kranzabschnitt (24) der Federkomponente (20) an der Montagefläche (10a) der Aufnahme (10) zu befestigen, umfasst.

10. Halter (1) nach Anspruch 9, wobei die Federkomponente (20) mehrere Federkomponentenlöcher (20h) umfasst, die konfiguriert sind, die Befestigungskomponenten (50) aufzunehmen, die in die Pressringlöcher (32h) eingesetzt sind.

11. Halter (1) nach einem der Ansprüche 1 bis 4,
wobei die Federkomponente (20) mehrere Federkomponentenlöcher (20h) umfasst; und
wobei das Befestigungsmittel (30) mehrere Befestigungskomponenten (50) zum Einsetzen in die Federkomponentenlöcher (20h), um den Kranzabschnitt (24) der Federkomponente (20) an der Montagefläche (10a) der Aufnahme (10) zu befestigen, umfasst.

12. Halter (1) nach Anspruch 10 oder 11, wobei sich die Federkomponentenlöcher (20h) in Bezug auf die Mulden (44), die zwischen den freitragenden Federelementen (40) gebildet sind, radial innen befinden.

13. Halter (1) nach einem der vorhergehenden Ansprüche,
wobei der Sitz (14) als ein Stufenabschnitt (14s) an einer Innenumfangsfläche (11a) der Aufnahme (10) ausgebildet ist; und/oder
wobei ein Innendurchmesser (14d1) des Sitzes (14) und/oder ein Durchmesser (22d) des Lochs (12) der Aufnahme (10) kleiner als ein Durchmesser (5d) des optischen Elements (5) sind; und/oder
wobei ein Innendurchmesser (10d1) der Montagefläche (10a) größer oder gleich einem Durchmesser (5d) des optischen Elements (5) ist.

14. Laserbearbeitungskopf (100), der einen Halter (1) umfasst, wobei der Halter (1) nach einem der vorhergehenden Ansprüche ist.

## Revendications

1. Support (1) pour monter un élément optique (5) sur une tête d'usinage au laser (100), le support (1) comportant :
- une douille (10) comportant une ouverture (12) et un siège (14) encerclant l'ouverture (12), dans lequel le siège (14) est configuré pour recevoir l'élément optique (5) de telle sorte que l'élément optique (5) est positionné sur l'ouverture (12) ;
- une partie de ressort annulaire (20) configurée pour être positionnée sur une surface de montage (10a) de la douille (10) et comportant une portion de rebord (24) et une pluralité d'éléments de ressort en porte-à-faux (40) s'étendant radialement vers l'intérieur à partir de la portion de rebord (24), dans lequel des bords radialement intérieurs (42) des éléments de ressort en porte-à-faux (40) définissent une ouverture (22) qui chevauche l'ouverture (12) ; et
- des moyens de fixation (30) configurés pour fixer la portion de rebord (24) de la partie ressort (20) à la surface de montage (10a) de la douille (10) de telle sorte que les éléments de ressort en porte-à-faux (40) sont disposés sur l'élément optique (5) pour presser l'élément optique (5) vers le siège (14), lorsque l'élément optique (5) est reçu sur le siège (14) ;
dans lequel le support (1) comporte en outre l'élément optique (5) ayant une première surface optique (5a) et une seconde surface optique (5b) ;
dans lequel la seconde surface optique (5b) est positionnée sur l'ouverture (12) et la première surface optique (5a) fait saillie vers l'extérieur au-dessus de la surface de montage (10a) de la douille (10) ; et
dans lequel les éléments de ressort en porte-à-faux (40) sont disposés sur la première surface optique (5a) de l'élément optique (5) pressant l'élément optique (5) vers le siège (14) ;
**caractérisé en ce que**
les éléments de ressort en porte-à-faux (40) sont uniquement en contact avec un bord (5a1) de l'élément optique (5).

2. Support (1) selon la revendication 1,
dans lequel la portion de rebord (24) et les éléments de ressort en porte-à-faux (40) ont une structure plane perpendiculaire à un axe central (20x) de la portion de ressort (20) dans un état non monté de l'élément optique (5) ; et/ou
dans lequel les éléments de la pluralité d'éléments de ressort en porte-à-faux (40) ont un agencement radialement symétrique.

3. Support (1) selon l'une quelconque des revendications précédentes,
dans lequel un diamètre extérieur (20d) de la partie ressort (20) est égal à un diamètre extérieur (10d2) de la surface de montage (10a) de la douille (10) et/ou est supérieur à un diamètre (5d) de l'élément optique (5).

4. Support (1) selon l'une quelconque des revendications précédentes, dans lequel un diamètre (5d) de l'élément optique (5) est supérieur à un diamètre (22d) de l'ouverture (22) définie par les éléments de ressort en porte-à-faux (40) et à un diamètre (12d) de l'ouverture, respectivement.

5. Support (1) selon l'une quelconque des revendications précédentes, dans lequel les moyens de fixation (30) comportent :
- un anneau de pression (32) configuré pour être positionné sur la portion de rebord (24) de la partie de ressort (20) ; et
- un élément de fixation (34) configuré pour fixer l'anneau de pression (32) à la douille (10) pour fixer la portion de rebord (24) de la partie de ressort (20) à la surface de montage (10a) de la douille (10).

6. Support (1) selon la revendication 5,
dans lequel un diamètre intérieur (32d1) de l'anneau de pression (32) est supérieur à un diamètre (22d) de l'ouverture (22) définie par les éléments de ressort en porte-à-faux (40) ; et/ou
dans lequel un diamètre intérieur (32d1) de l'anneau de pression (32) est égal ou inférieur à un diamètre (44d) d'une circonférence définie par des creux (44) formés entre les éléments de ressort en porte-à-faux (40).

7. Support (1) selon la revendication 5 ou 6, dans lequel l'anneau de pression (32) comporte une première surface (32a) s'éloignant de la portion de rebord (24) de la partie de ressort (20) et une seconde surface (32b) dirigée vers la portion de rebord (24) de la partie de ressort (20) ;
dans lequel la seconde surface (32b) de l'anneau de pression (32) comporte une zone plate (32b1) perpendiculaire à un axe central (32x) de l'anneau de pression (32) et une zone non plate (32b2) disposée radialement vers l'intérieur de la zone plate (32b1) ; et
dans lequel la zone plate (32b1) est configurée pour être en contact avec la portion de bord (24) de la partie de ressort (20) et la zone non plate (32b2) est configurée pour être espacée de la partie de ressort (20).

8. Support (1) selon la revendication 7, dans lequel la zone plate (32b1) est configurée pour être en contact avec des creux (44) formés entre les éléments de ressort en porte-à-faux (40).

9. Support (1) selon l'une quelconque des revendications 5 à 8,
dans lequel l'anneau de pression (32) comporte une pluralité de trous d'anneau de pression (32h) ;
dans lequel la surface de montage (10a) comporte une pluralité de trous de surface de montage (10h) ; et
dans lequel l'élément de fixation (34) comporte une pluralité de fixations (50) destinées à être insérées dans les trous d'anneau de pression (32h) pour fixer la portion de rebord (24) de la partie de ressort (20) à la surface de montage (10a) de la douille (10).

10. Support (1) selon la revendication 9, dans lequel la partie de ressort (20) comporte une pluralité de trous de partie de ressort (20h) configurés pour recevoir les fixations (50) insérées dans les trous d'anneau de pression (32h).

11. Support (1) selon l'une quelconque des revendications 1 à 4,
dans lequel la partie de ressort (20) comporte une pluralité de trous de partie de ressort (20h) ; et
dans lequel les moyens de fixation (30) comportent une pluralité de fixations (50) destinées à être insérées dans les trous de partie de ressort (20h) pour fixer la portion de rebord (24) de la partie de ressort (20) à la surface de montage (10a) de la douille (10).

12. Support (1) selon la revendication 10 ou 11, dans lequel les trous de partie de ressort (20h) sont radialement vers l'intérieur de creux (44) formés entre les éléments de ressort en porte-à-faux (40).

13. Support (1) selon l'une quelconque des revendications précédentes,
dans lequel le siège (14) est formé comme une portion de gradin (14s) sur une surface circonférentielle intérieure (11a) de la douille (10) ; et/ou
dans lequel un diamètre intérieur (14d1) du siège (14) et/ou un diamètre (22d) de l'ouverture (12) de la douille (10) est inférieur à un diamètre (5d) de l'élément optique (5) ; et/ou
dans lequel un diamètre intérieur (10d1) de la surface de montage (10a) est supérieur ou égal à un diamètre (5d) de l'élément optique (5).

14. Tête de traitement au laser (100), comportant un support (1), dans laquelle le support (1) est selon l'une quelconque des revendications précédentes.
